## Europäisches Patentamt
## European Patent Office
## Office européen des brevets

(19)

(11) Numéro de publication: **0 020 695 B1**

(12) **FASCICULE DE BREVET EUROPEEN**

(45) Date de publication du fascicule du brevet: **19.09.84**

(51) Int. Cl.³: **C 08 L 91/08,** C 09 D 3/387

(21) Numéro de dépôt: **80900077.1**

(22) Date de dépôt: **27.12.79**

(86) Numéro de dépôt international:
**PCT/FR79/00129**

(87) Numéro de publication internationale:
**WO 80/01386 10.07.80 Gazette 80/15**

(54) **Procédé de formation d'un revêtement protecteur contre l'affichage, les graffiti et l'adhérence de poussières.**

(30) Priorité: **28.12.78 FR 7836768**

(43) Date de publication de la demande:
**07.01.81 Bulletin 81/01**

(45) Mention de la délivrance du brevet:
**19.09.84 Bulletin 84/38**

(84) Etats contractants désignés:
**AT DE NL SE**

(56) Documents cités:
**GB-A- 681 877**
**US-A-3 785 841**

(73) Titulaire: **SEJOURNANT, Francine**
**29 rue de l'Entente**
**94400 Vitry-sur-Seine (FR)**

(72) Inventeur: **SEJOURNANT, Francine**
**29 rue de l'Entente**
**94400 Vitry-sur-Seine (FR)**

(74) Mandataire: **Casalonga, Axel**
**BUREAU D.A. CASALONGA OFFICE JOSSE &**
**PETIT Baaderstrasse 12-14**
**D-8000 München 5 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# 0 020 695

**Description**

La présente invention est relative à un procédé de formation d'un revêtement de protection des murs et parois contre l'affichage, la pénétration et l'accrochage de graffitis et/ou peinture et contre l'adhérence des poussières et agents poluants divers dans et sur de tels supports.

Des compositions anti-adhésives ont déjà été proposées en vue de protéger les murs contre l'affichage sauvage. Ces compositions contiennent uniquement, de l'huile de silicone, un agent conflant, un solvant.

Les compositions de l'art antérieur présentent, cependant l'inconvénient de se dessécher très rapidement et de perdre, de ce fait, leur pouvoir anti-adhésif. Par ailleurs, lorsqu'elles sont appliquées sur les supports tels que murs, elles ont tendance à être collantes et à absorber les poussières et à changer la coloration de deux-ci, nuisant en cela à l'esthétique des parois auxquelles elles sont appliquées.

Enfin, les compositions de l'art antérieur présentent l'inconvénient d'être d'un prix de revient élevé et difficile à stocker, et leur durée d'efficacité est limitée dans le temps.

La demanderesse a découvert maintenant un procédé de formation d'un revêtement à base de cire ne présentant pas les inconvénients susnommés. Ce procédé permet, en effet, d'obtenir sur les parois à revêtir une pellicule uniforme et fine possédant des propriétés anti-adhésives vis-à-vis des affiches, des étiquettes adhésives, des colles et peintures diverses, ainsi que des poussières et tout agent polluant.

Ce procédé permet d'obtenir un film auto-lavable par les eaux de pluie, ou un jet d'eau et présente l'avantage d'avoir un bon glissement et donc un bon coefficient de frottement.

Les composilions utilisées selon l'invention, permettent de former un film protecteur empêchant l'eau et l'humidité de la traverser et par conséquent peuvent servir de film protecteur anti-corrosion (sur métaux peintures etc...) et hydrophobe (murs, béton, pierre, briques, etc...).

Il est possible également grâce à l'invention d'empêcher la formation des "Moustaches" sur les façades des constructions, la poussière ne pouvant traverser et s'accrocher sur le film protecteur.

La composition utilisée selon l'invention présente une excellente stabilité dans le temps et ne laisse pas de trace sur la paroi pòrtant ce revêtement, elle a également une durée d'efficacité améliorée allant de 2 à 10 ans selon l'utilisation.

La présente invention a donc pour objet un procédé de traitement des surfaces mettant en oeuvre la composition susdéfinie.

D'autres objets de l'invention résulteront à la lecture de la description et des exemples qui suivent.

La composition antiadhésive utilisée selon l'invention est essentiellement caractérisée par le fait qu'elle contient dans un milieu solvant organique au moins une cire microcristalline ayant un point de fusion compris entre environ 40 et 150°C et une huile de silicone.

Les cires microcristallines plus particulièrement préférées sont celles ayant un point de fusion de 58—60°C, utilisées éventuellement en mélange avec des cires microcristallines à point de fusion plus élevé.

Cette composition peut contenir, en plus de la cire microcristalline susmentionée et de l'huile de silicone, d'autres cires et, de préférence, au moins une cire minérale choisie parmi les cires oxyéthylénées et/ou les cires ayant un point de fusion compris entre 40 et 110°C, tel que de préférence une cire paraffinique et, notamment, une cire paraffinique dénommée Pétrolatum ou Paraffine blonde.

L'utilisation en combinaison de cires microcristallines du type susnommé de de cire paraffinique permet d'améliorer les propriétés antiadhésives des parois ainsi revêtues.

La cire et/ou les cires qui peuvent être utilisées en combinaison avec la cire microcristalline susmentionnée sont présentes de préférence, dans des proportions comprises entre 0,05 à 80% en poids par rapport au poids de la première cire précitée.

Les cires sont présentes notamment, dans la composition selon l'invention dans des proportions comprises entre 4 et 80% en poids, par rapport au poids total de la composition, et de préférence entre 4 et 65% en poids, et en particulier entre 10 et 30% en poids.

Les solvants organiques plus particulièrement utilisables, selon l'invention, sont des solvants de cire et on peut citer, plus particulièrement, les dérivés halogénés d'hydrocarbure, le benzène, les toluène, le white spirit.

Dans une mise en oeuvre préférée de l'invention on utilise le white spirit, en particulier à moins 5% aromatiques ou bien un trichloro-1,1,1, éthane vendu sous la dénomination "Baltane"® par la société RHONE-POULENC.

Le solvant ou mélange de solvant est présent, de préférence, dans des proportions comprises entre 20 et 96% et de préférence, entre 70 et 90% en poids par rapport au poids total de la composition.

Il est bien entendu que l'on peut ajouter, sand pour autant sortir du cadre de la présente invention, tout autre composé ou substance permettant d'obtenir l'effet antiadhésif recherché, ou de conférer au product des propriétés supplémentaires, par exemple brillance, etc...

L'huile de silicone est présente de préférence dans des proportions comprises entre 0,01 et 15% et de préférence entre 0,1 et 5% en poids, par rapport au poids total de la composition.

2

**0 020 695**

Cette huile ou/et graisse de silicone doit, de préférence, être miscible aux solvants précités qui constituent la base des compositions selon l'invention.

Parmi les huiles de silicone utilisables selon l'invention on peut citer les méthylpolysiloxane ayant une viscosité de $5 \times 10^{-4}$ et 2,5 $m^2s^{-1}$ (500 à 2.500.000 cs), les méthylphénylpolysiloxanes ayant une viscosité de $10^{-6}$ à $10^{-1}$, ou le mélange de ces deux types de silicone, les viscosités préférées étant comprises entre $5 \times 10^{-4}$ et 0,1 $m^2.s^{-1}$ (500 et 100.000 cs).

Dans une autre forme de réalisation de l'invention on peut utiliser en combinaison avec la ou les cires précitées, un agent gonflant, tel qu'un acide gras à base de suif sous forme d'un savon d'aluminium (stéarate d'aluminium) cet agent gonflant étant présent dans des proportions comprises entre 0,01 et 10% en poids, par rapport au poids total de la composition, et de préférence comprise entre 0,01 et 2% en poids.

Il est également possible d'ajouter à la composition susdéfinie un savon métallique à base de calcium à raison de 0,01 à 10% et de préférence de 0,05 à 3% en poids, par rapport au poids total de la composition.

Il va de soi que les proportions indiquées sont celles de la composition directement destinée à être appliquée sur le support à traiter.

Elle peut de ce fait être préparée par dilution avant application d'une composition concentrée. Les compositions concentrées ont une concentration de 4 à 9 fois plus élevée par rapport aux concentrations indiquées ci-dessus.

La préparation des compositions utilisées selon l'invention consiste essentiellement à fondre, sous agitation, la ou les cires dans le même poids de solvant, à une température supérieure de 3 à 20°C et de préférence de 8 à 10°C au point de fusion de la cire ayant le point de fusion le plus élevé. On arrête de chauffer tounours sous agitation en on incorpore le reste du solvant contenant l'huile de silicone à température ambiante afin de former une bonne dispersion et on laisse refroidir le mélange doucement sous agitation.

Le procédé de traitement des supports, objet de l'invention, consiste à appliquer au moyen de dispositifs d'enduction usuels, tels que brosse, pinceau, pistolet, la composition telle que définie ci-cessus sur les supports à traiter.

On constate, après traitement que des affiches appliquées sur un tel support n'adhèrent pas ou du moins se décollent facilement. Généralement, elles glissent et tombent d'elles-mêmes.

Les graffitis ou la peinture appliquée sur un tel support, n'adhérent pas et s'éliminent par brossage.

La composition utilisée selon l'invention présente également l'avantage de pouvoir être détruite à l'aide d'un décapant ou à l'aide d'un jet d'eau chaude sous pression, d'une tempétature supérieure au point de fusion de la cire ayant le point de fusion le plus élevé, ce qui peut être utile dans certains cas, notamment, lorsque l'on veut revêtire le support d'un autre revêtement, ou peinture.

Dans le cas où un mélange d'huile de silicones entre dans la composition, pour enlever les graffitis, il suffit de frotter ou de détruire, le film protecteur à l'aide d'un solvant du type de ceux mentionnés ci-dessus pour la fabrication, ou à l'aide d'un solvant chloré comme par exemple le chlorure de méthylène.

Le procédé susdéfini, notamment lorsqu'il est appliqué sur des supports poreux, peut être précédé d'une étape d'enduction de la surface à traiter au moyen d'une composition aqueuse à base de cire auto émulsionnable ayant un point de fusion compris entre environ 45 et 110°C. Ces cires sont choisies en particulier parmi les cires minérales oxydées ou les cires esters rendues émulsionnables à l'aide d'un agent de surface anionique, cationique ou non ionique, les cires de synthèse d'origine végétale ayant un point de fusion compris entre 45 et 110°C associées à un agent émulsionnant non ionique parmi lesquels on peut citer les cires à base de cire de Carnauba ayant un point de fusion de 70° à 78°C et les cires minérales ayant un point de fusion compris entre 40 et 65°C telles que les cires paraffiniques du type Pétrolatum ou Paraffine blonde.

On peut également appliquer au moyen de cette première composition aqueuse une cire microcristalline ayant un point de fusion compris entre 48 et 110°C et de préférence une cire microcristalline du type susdéfini.

La cire de synthèse d'origine végétale est présente dans des proportions de préférence comprises entre 0,5 et 12% en poids par rapport au poids total de cette première composition alors que les cires minérales et/ou les cires esters sont présentes dans des proportions comprises entre 0,05 et 40% en poids par rapport au poids de la cire de synthése d'origine végétale.

Les agents émulsionnants non ioniques sont choisis de préférence paarmi les alcools ou alcoylphénols oxyéthylénés de bas poids moléculaire. Les agents tensioactifs anioniques lorsqu'ils sont présents sont choisis de préférence parmi les savons dérivés d'acide gras naturel ou synthétique.

Ce procédé présente l'avantage de conférer des propriétés antiadhésives à des supports fortement poureux et la combinaison de ces deux types de couches au niveau de ces supports confère à ceux-ci des propriétés antiadhésives améliorées.

Les exemples suivants sont destinés à illustrer l'invention sans pour autant présenter un caractère limitatif.

3

# 0 020 695

Exemple I

|  | | % en poids |
|---|---|---|
| — Cire microcristalline de point de fusion (58—60°C) vendue sous la dénomination 23—60 par la Sociéte TISCCO | | 18 |
| — Huile de silicone(méthylpolysiloxane) vendue sous la dénomination 47 V 5000 par la Sociéte RHONE POULENC | | 3 |
| — White spirit | qsp | 100 |

Exemple II

L'exemple suivant est destiné à illustrer une variante de l'invention mettant en oeuvre un agent gonflant.

|  | | % en poids |
|---|---|---|
| — Cire microcristalline précitée | | 40 |
| — Cire paraffinique (paraffine blonde) vendue sous la dénomination PA/BL par la Société R.F.O. (point de fusion 55°C) | | 20 |
| — Huile de silicone(méthylphénylpolysiloxane) vendue sous la dénomination Rhodorsil® huile 710 par Rhone Poulenc de viscosité 500 cs | | 5 |
| — Stéarate d'aluminium | | 1 |
| — White spirit | qsp | 100 |

Les poussières présentes en surface s'éliminent facilement par brossage ce qui évite le sablage de la façade.

Par ailleurs, la pellicule ainsi formée a pu être éliminée par application d'un jet d'eau chaude à 75°C environ, ce qui permet d'éviter la pose d'échauffaudage et d'installations onéreuses en vue du nettoyage de la paroi.

Exemple III

|  | | % en poids |
|---|---|---|
| — Huile de silicone 47 V 100.000 | | 4 |
| — Huile de silicone 47 V 10.000 | | 7 |
| — Huile de silicone Rhodorsil huile 710 | | 2 |
| — Cire microcristalline précitée | | |
| — Cire microcristalline (point de fusion 104°C) vendue sous la dénomination PS2 par là Sté TISCCO | | 4 |
| — White spirit | qsp | 100 |

Le revêtement ainsi obtenu présente une meilleure résistance lorsqu'il est appliqué sur des façaces exposées à la chaleur du soleil dans les pays chauds.

Exemple IV

On applique dans un premier temps la composition suivante:

|  | | % en poids |
|---|---|---|
| — Cire de synthèse dérivé de cire végétale (point de fusion 75°C) vendue sous la dénomination Cire OFR par la Société R.F.O. | | 2,4 |
| — Cire minérale dénommée paraffine blonde vendue sous la dénomination PA/BL par la Société TISCCO (point de fusion environ 55°C) | | 0,6 |
| — Cire microcristalline de point de fusion (58—60°C) vendue sous la dénomination 23—60 par la Société TISCCO | | 0,6 |
| Eau | qsp | 100 |

4

Cette composition a été préparée en introduisant dans la même poids d'eau les trois cires précitées et en portant la température de l'ensemble à environ 78°C en agitant. Le mélange bien uniforme ainsi obtenu est ensuite dispersé sous agitation de velui-ci dans l'eau froide (20°C) à l'aide d'un homogénéisateur.

Après séchage on applique sur le support ainsi prétraité la composition de l'exemple I.

On constate la formation d'un support lisse et présentant de bonnes propriétés anti-adhésives vis-à-vis des affiches.

Des résultats similaires sont constatés en appliquant comme deuxième composition la composition de l'exemple III ci-dessus cité.

## Revendications

1. Procédé de formation d'un revêtement de protection contre l'affichage, la pénétration et l'accrochage de graffitis et/ou peinture et contre l'adhérence des poussières et agents polluants divers sur un support, caractérisé par le fait qu'on applique sur ledit support au moins une composition contenant en milieu solvant organique au moins une ou plusieurs cires, l'une de ces cires étant constituée au moins par une cire microcristalline ayant un point de fusion compris entré 40 et 150°C, ces cires étant présentes dans les proportions comprises entre 10 et 30% en poids et au moins une huile de silicone choisie parmi les méthylpolysiloxanes ayant une viscosité comprise entre $5 \times 1)^{-4}$ et 2,5 m²/s (500 et 2 500 000 cst) et/ou les méthyl-phénylpolysiloxanes ayant une viscosité comprise entre $1 \times 10^{-5}$ et $1 \times 10^{-1}$ m²/s (10 et 100 000 sct) présents dans les proportions comprises entre 0,01 et 15% en poids en un solvant dans des quantités suffisantes pour cent.

2. Procédé selon la revendication 1, caractérisé par le fait que la composition contient également une cire minérale choisie parmi les cires oxyéthylénées et/ou cires esters ayant un point de fusion compris entre 40 et 100°C.

3. Composition selon la revendication 2, caractérisée par le fait que la composition contient comme cire minérale une cire paraffinique.

4. Composition selon la revendication 2 ou 3, caractérisée par le fait que les cires autres que la cire microcristalline sont présentes dans des proportions comprises entre 0,05 et 80% en poids par rapport au poids de la cire microcrystalline.

5. Procédé selon l'une quelconque des revendications 1 à 4, caractérisé par le fait que le milieu solvant organique est choisi parmi les dérivés halogénés d'hydrocarbure, le benzène, le toluène, le white spirit.

6. Procédé selon l'une quelconque des revendications 1 à 5, caractérisé par le fait que la composition utilisée contient également un agent gonflant dans des proportions comprises entre 0,01 et 10% par rapport au poids total de la composition.

7. Procédé selon la revendication 6, caractérisé par le fait que l'agent gonflant utilisé est un acide gras à base de suif sous forme d'un savon d'alumine.

8. Procédé selon l'une quelconque des revendications 1 à 7, charactérisé par le fait que la composition contient également un savon métallique à base de calcium dans les proportions de 0,01 à 10% par rapport au poids total de la composition.

9. Procédé selon l'une quelconque des revendications 1 à 8, caractérisé par le fait qu'au moins l'une des cires microcristallines utilisées a un point de fusion de 58—60°C.

10. Procédé selon l'une quelconque des revendications 1 à 9, caractérisé par le fait que ledit support est enduit au préalable au moyen d'une composition contenant une cire auto-émulsionnable ayant un point de fusion compris entre 45 et 110°C choisie parmi les cires minérales oxydées, les cires esters rendues émulsionnables à l'aide d'un agent de surface anionique, cationique ou non ionique, les cires de synthèses d'origine végétales ayant un point de fusion compris entre 45 et 110°C, associées à un agent émulsionnant non ionique, ainsi qu'éventuellement une cire microcristalline ayant un point de fusion compris entre 48 et 110°C, dans de l'eau.

## Patentansprüche

1. Verfahren zur Herstellung eines Schutzüberzugs gegen Plakatieren, Eindringen und Haften von Wanschmiererein und/oder Bemalen und gegen das Haften von Stäuben und verschiedenen Verschmutzungen auf einem Träger, dadurch gekennzeichnet, daß man auf dem genannten Träger wenigstens eine Mischung aufbringt, die in einem organischen Lösungsmittel wenigstens ein Wachs oder auch mehrere Wachse enthält, wobei eines dieser Wachse aus wenigstens einem mikrokristallinen Wachs mit einem Schmelzpunkt zwischen 40 und 150°C, wobei diese Wachse in einem Verhältnis zwischen 10 und 30 Gewichtsprozent vorhanden sind, und wenigstens einem Silikonöl, das aus den Methylpolysiloxanen mit einer Viskosität zwischen $5 \times 10^{-4}$ und 2,5 m²/s (500 bis 2 500 000 cst) und/oder den Methylphenylpolysiloxanen mit einer Viskosität zwischen $1 \times 10^{-5}$ und $1 \times 10^{-1}$ m²/s (10 bis 100 000 cst), die in Verhältnis 0,01 bis 15 Gewichtsprozent vorhanden sind, ausgewählt wird, und einem Lösungsmittel in aisreichend prozentualen Mengen besteht.

2. Verfahren gemäß Anspruch 1, dadurch gekennzeichnet, daß die Mischung auch ein

5

## 0 020 695

Mineralwachs enthält, das aus den Oxyethylenwachsen und/oder den Wachsestern mit einem Schmelzpunkt zwischen 40 und 110°C ausgewählt wird.

3. Mischung gemäß Anspruch 2, dadurch gekennzeichnet, daß die Mischung ferner als Mineralwachs ein Paraffinwachs enthält.

4. Mischung gemäß Anspruch 2 oder 3, dadurch gekennzeichnet, daß die Wachse, abgesehen von dem microkristallinen Wachs, im Verhältnis von 0,05 bis 80 Gewichtsprozent bezogen auf des Gewicht des mikrokristallinen Wachses vorliegen.

5. Verfahren gemäß einem beliebigen der Ansprüche 1 bis 4, dadurch gekennzeichnet, daß das organische Lösungsmittel unter den halogenisierten Kohlenwasserstoffderivativen Benzol, Toluol, Lackbenzin ausgewählt wird.

6. Verfahren gemäß einem beliebigen der Ansprüche 1 bis 5, dadurch gekennzeichnet, daß die eingesetzte Mischung ferner ein Treibmittel im Verhältnis von 0,01 bis 10 Gewichtsprozent bezogen auf das Gesamtgewicht der Mischung enthält.

7. Verfahren gemäß Anspruch 6, dadurch gekennzeichnet, daß das eingesetzte Treibmittel eine Fettsäure auf Talgbasis in der Form einer Aluminiumsteife ist.

8. Verfahren gemäß einem beliebigen der Ansprüche 1 bis 7, dadurch gekennzeichnet, daß die Mischung ferner eine Metallseife auf Calciumbasis im Verhältnis von 0,01 bis 10% in Bezug auf das Gesamtgewicht der Mischung enthält.

9. Verfahren gemäß einem beliebigen der Ansprüche 1 bis 8, dadurch gekennzeichnet, daß wenigstens eines der eingesetzten mikrokristallinen Wachse einen Schmelzpunkt von 58 bis 60°C hat.

10. Verfahren gemäß einem beliebigen der Ansprüche 1 bis 9, dadurch gekennzeichnet, daß der genannte Träger vorher mit einer Mischung überzogen wird, die ein selbstemulgierendes Wachs mit einem Schmelzpunkt zwischen 45 und 110°C, das aus den oxidierten Mineralwachsen, den mit einem anionischen, kationischen oder nichtionischen grenzflächenaktiven Stoff emulgierbar gemachten Wachsestern, den synthetischen Wachsen auf pflanzlicher Basis mit einem Schmelzpunkt zwischen 45 und 110°C, zusammen mit einem nichtionischen Emulglermittel sowie ggf. einem mikrokristallinen Wachs mit einem Schmelzpunkt zwischen 48 und 110°C in Wasser ausgewält, wird, enthält.

## Claims

1. Process for the formation of coating for protecting against bill-sticking, the penetration and adherence of graffiti and/or paint and against the adhesion of dusts and various pollutants on such substrates, characterised in that at least a composition containing in an organic solvent medium at least one or several waxes, one of these waxes being constituted by a microcrystalline wax having a melting point of between 40 to 150°C, these waxes being present in an amount of 10 to 30% by weight and at least one silicone oil choosen amongst the methylpolysiloxane having a viscosity of between $5 \times 10^{-4}$ and 2,5 $m^2/s$ (500 and 2 500 000 cst) and/or a methyl-phenyl polysiloxane having a viscosity of between $1 \times 10^{-5}$ and $1 \times 10^{-1}$ $m^2/s$ (10 and 100 000 cst) present in proportions comprised between 0,01 and 15% by weight and a solvent in an amount sufficient for 100, is used.

2. Process according to claim 1, characterized in that the composition contains also a mineral wax selected from amongst the oxyethylenated waxes and/or ester waxes having a melting point of between 40 and 110°C.

3. Composition according to claim 2 characterized in that the composition contains as a mineral wax a paraffin wax.

4. Composition according to claim 2 or 3, characterized in that the waxes other than the mincrocrystalline wax are present in proportion comprised of between 0.05 and 80% by weight, relative to the weight of the microcrystalline wax.

5. Process according to any one of claims 1 to 4, characterized in that the organic solvent medium is selected from amongst the halogenated derivatives of hydrocarbons, benzene, toluene or white spirit.

6. Process according to any one of claims 1 to 5, characterized in that the composition used contains also a swelling agent in an amount of between 0.01 and 10% by weight.

7. Process according to claim 6, characterized in that the swelling agent used is a fatty acid based on tallow in the form of an aluminium soap.

8. Process according to any one of claims 1 to 7, characterized in that the composition contains also a metal soap based on calcium, in an amount of 0.01 to 10% by weight.

9. Process according to anyone of claims 1 to 8, characterized in that at least one of the microcrystalline wax used has a melting point of 58—60°C.

10. Process according to any one of claims 1 to 9, characterized in that the said substrate is first coated with a composition containing a self-emulsifying wax having a melting point of between 45 and 110°C selected from amongst the oxidised mineral waxes, ester waxes which have been rendered emulsifiable with the aid of an anionic, cationic or non ionic surface active agent, synthetic waxes of vegetable origin having a melting point of between 45 and 110°C, combined with a non-ionic emulsifying agent as well as eventually a microcrystalline wax having a melting point of between 48 and 11°C in water.

6